# EUROPÄISCHE PATENTSCHRIFT

(11) **EP 0 575 799 B1**
(45) Veröffentlichungstag und Bekanntmachung des Hinweises auf die Patenterteilung: **16.10.1996**
(21) Anmeldenummer: 93109071.6
(22) Anmeldetag: 05.06.1993
(51) Int. Cl.: C04B 41/68, C04B 28/26

(54) **Verbesserung der Frost-Tausalz-Beständigkeit von Betonkonstruktionen**
Improvement of the freeze-thawsalt-resistance of concrete constructions
Amélioration de la résistance des constructions de béton aux sels anti-Verglas

(30) Priorität: 10.06.1992 DE 4219034
(43) Veröffentlichungstag der Anmeldung: 29.12.1993
(73) Patentinhaber: Jaklin, Hans, D-54293 Trier (DE)
(72) Erfinder: Jaklin, Hans, D-54293 Trier (DE)
(74) Vertreter: Eggert, Hans-Gunther, Dr.

(56) Entgegenhaltungen:
- EP-A- 0 264 541
- FR-A- 2 520 353
- DATABASE WPIL Section Ch, Week 7627, Derwent Publications Ltd., London, GB; Class L02, AN 76-50929X

## Beschreibung

Die Erfindung betrifft die Verbesserung der Frost-Tausalz-Beständigkeit von Betonkonstruktionen.

Erhärteter Beton und Mörtel enthalten immer ein feines kapillares Porensystem, das in der Zementpaste durch die Hydratation entstanden ist und das die Wasserkondensation im Baukörper fördert. Wasser wird infolge des Kapillarsystems auch unmittelbar aus feuchter Luft und nicht nur in verflüssigter Form als Tau und Niederschlag aufgenommen.

Die Kondensatmenge ist bei einer gegebenen Porenverteilung von der relativen Luftfeuchte der Umgebung abhängig.

Die größte Wassereindringtiefe liegt bei allen vorschriftsmäßig hergestellten Betonen mit einem Wasser/Zemenwert (W/Z) von maximal 0,6 in der Regel unter 3 cm.

Neben den Gelporen von 1,5-3 nm, deren Wasser als "festes Wasser" erst bei hohen Temperaturen ausgetrieben werden kann, und den Kapillarporen von 1-10 µm (Messungen nach Brownyard, T.L., Proc. ACI 43, 1947, 101-132) treten, abhängig von der Mischungszusammensetzung und der Herstellqualität, größere Poren und Risse im Oberflächenbereich auf.

Das in den oberflächlichen Schichten eingedrungene flüssige Wasser geht beim Gefrieren in das leichtere Eis mit einer Dichte von 0,88-0,92 g/ml über und dehnt sich dabei um rund 11 % aus. Obwohl ein Teil des Wassers, z.B. das in den engeren Kapillaren, infolge der Dampfdruckerniedrigung, bei z.B. -10°C, noch flüssig sein kann, gefriert das Wasser in den sog. Wassersäcken, den inneren Wasserpfützen, Wasserporen und Ritzen und übt einen starken Druck auf den Betonkörper aus. Die Expansion durch den Eisdruck überwiegt die Kontraktion durch die Abkühlung. Die Längenänderung kann bei -20°C, wenn auch das Wasser in den engeren Kapillaren zu Eis geworden ist, 1-2 mm/m betragen. Ein nur einmal gefrorener Beton mit dieser ersten Schädigung kehrt aber beim Auftauen infolge der entstandenen inneren Auflokckerung, besonders im Oberflächenbereich nicht mehr in die Ausgangslage zurück.

Im Jahre 1940 wurde in den USA zufällig die Frostschutzwirkung von Luftporen (LP) auf Beton entdeckt. Zunächst wurde das gelegentliche gute Frostverhalten von Betonen einigen bestimmten Zementtypen zugeschrieben. Die dem Anschein nach "von Natur aus" frostbeständigen Zemente waren durch eine geringe Menge an Schmieröl verunreinigt, das als Luftporen-Mittel (LP-Mittel) gewirkt hatte. (Dyckerhoff, H., ZKG 1, 1948, 93-95).

Sind in einem Beton 16 % LP vorhanden, so stellt man bei der Längenmessung während des Frost-Auftau-Wechsels keine Expansion, sondern eine Schrumpfung bei -20°C von einigen Zehntel mm/m fest, während beim Auftauen derselbe Zustand erreicht wird, d.h. es tritt keine Änderung gegenüber dem Ausgangszustand ein. Mit 8-10 % LP verändert der Zementstein seine Länge zwischen +20°C und -20°C nicht (nach T.C. Powers).

Die Wirkung der Luftporen in der erhärteten Zementpaste beruht darauf, daß sie sich beim Durchnässen des Betons nicht mit Wasser füllen, beim expandierenden Frieren des Kapillar- und Ritzwassers als Volumenreserve zur Verfügung stehen und den hydraulischen bzw. Eisdruck verhindern. Eis und Wasser können in die Luftporen entweichen. Die Größe der als Frostschutz wirksamen LP liegt zwischen 0,1-2 mm. Nach anderen Autorenangaben darf der Durchmesser der LP 0,3 mm nicht übersteigen. Der Gehalt sollte zwischen 4-5 % liegen und der Abstand der Luftporen höchstens 0,25 mm betragen, damit bei spontaner Eisbildung genügend Ausweichraum zur Verfügung steht und schnell erreichbar ist.

Den positiven Einfluß der Luftporen auf das Frost-Tau-Verhalten steht ein negativer Einfluß auf die Festigkeit gegenüber. Nach K. Walz (DAfStb. H. 123, 1956) verringert sich die Biegefestigkeit je % eingebrachter Luft um 2-3 % und die Druckfestigkeit um 3-4 %. Geht man von den jeweiligen Höchstwerten aus, was zur Vorsicht angebracht ist, resultieren aus dem nötigen LP-Gehalt von 5 % eine um 15 % verminderte Biegefestigkeit und eine um 20 % geringere Druckfestigkeit.

Ein weiterer Nachteil der LP-Technik ist die relativ große Variable der Anwendungsmenge. Empfohlen werden 0,5-2 g/kg Zement. Die Schwierigkeit einer richtigen Dosierung des LP-Mittels besteht darin, daß der Bedarf an LP-Mitteln mit der Feinheit des Zements, z.B. von 3000 auf 5000 cm²/g spezif. Oberfläche, auf etwa das Doppelte wächst. Wasserlösliche Alkalien des Zements fördern die LP-Bildung, und die in allen technischen Zementen anwesenden organischen Substanzen (0,015 %) können den Bedarf erhöhen oder vermindern.

Die durch Vorversuche festgelegte Menge des LP-Mittels muß exakt am Mischer zugegeben werden, was bei einer Dosierung zwischen 0,5-2 g/1000 g Zement eine Sorgfalt erfordert, die unter Baustellenbedingungen nicht gewährleistet ist. Bei Mengenzugaben zwischen 0,05-0,2 % können sich kleine Differenzen, bezogen auf die absoluten Mengen, sich sehr stark auf die Betonqualität auswirken.

Die Ausbildung einer optimalen LP-Struktur ist zusätzlich noch von der Menge und Qualität der Zuschläge abhängig. Die Kornverteilung innerhalb der Zuschläge und besonders der Feinkornanteil haben hier den stärksten Einfluß auf die Größe und Verteilung der Luftporen im Beton.

Es ist unübersehbar, daß die Frostschäden an Fahrbahndecken und Rollfeldern der Flughäfen ständig zunehmen, obwohl diese Betone mit Hilfe von LP-Mitteln gefertigt wurden. Die wichtigsten Ursachen sind folgende:

Wie oben bereits geschildert, muß damit gerechnet werden, daß bei der Betonfertigung die LP-Anordnung und LP-Größenverteilung nicht optimal gelungen sind. In der Praxis geht es kaum noch um die Frost-Tau-Wechselwirkung-Beständigkeit, sondern fast ausschließlich um die Einwirkung von Tausalz während des Frost-Tau-Wechsels, kurz um die Frost-Tausalz-Beständigkeit.

Im Winter 1978/79 wurden auf den Autobahnen in der Bundesrepublik rund 3 kg Salz/m² gestreut. Der Angriff auf die Betonabdeckung und bald danach auf die Stahlbewehrung erfolgt zusätzlich durch Salzlösungen von hoher Konzentration bis zu ihrer Sättigung.

Wird eine vereiste Fahrbahn durch Salzstreuen aufgetaut, entsteht anfangs eine sog. Kältemischung aus Salz + Eis, wodurch die Temperatur in der Oberflächenschicht schlagartig abfällt. In der Praxis wird dies als Kälteschock bezeichnet.

Die Salzkonzentration des Schmelzwassers steigt am Tage, besonders bei Sonneneinstrahlung, durch Verdampfung von Wasser. Nach Sonnenuntergang fällt die Temperatur ab, die Löslichkeit für Salz sinkt und nimmt weiter ab, wenn ein Teil des Wassers in den Eiszustand übergeht, was wiederum die Salzkonzentration erhöht. Die Salzkristallisation verringert das verfügbare Porenvolumen für die Eisausdehnung, was den Druck im Betonoberflächensystem erhöht. Hydratbildung der Tausalze sorgt für eine weitere Erhöhung des Innendrucks, zumal die Oberflächenschicht mit Eis bedeckt ist und den Austritt von Wasser und Salz behindert. Schon bei Temperaturen um Null Grad (genau bei +0,15°C) liegen NaCl und NaCl.2H₂O im Gleichgewicht in gleicher Menge vor.

Es ist versucht worden, einen derart geschädigten Beton zum Schutz seiner Oberfläche und der Stahlbewehrung mit Silanen, Siloxanen oder Polysiloxanen zu hydrophobieren, was aber nicht befriedigte, weil die chemische Beständigkeit von Hydrophobierungen ungenügend ist.

Vor allem die Reaktionen der zementgebundenen und kalkgebundenen Baustoffe sind dabei von Bedeutung. Diese Stoffe bilden auch noch nach Jahren neue Reaktionsprodukte, wobei die Reaktionen bevorzugt an der inneren Oberfläche ablaufen. Dabei werden neue Oberflächen, die nicht hydrophob sind, gebildet, und es werden an der Poreninnenwand haftende Tenside in die neuen Reaktionsprodukte eingebaut und somit unwirksam.

Der zweite Aspekt ist die Reaktivität der Baustoffe gegenüber Stoffen aus der Umgebung. Durch die Carbonatisierung alkalischer Baustoffe ändern sich der pH-Wert der Porenlösung und die Zusammensetzung der inneren Oberflächen, was zu einer Desorption des Hydrophobierungsmittels führen kann.

Ein weiteres Problem der Hydrophobierung ist die Tatsache, daß hydrophobierte Baustoffe nicht erneut behandelt werden können, da das Hydrophobierungsmittel (i.a.) nicht mehr in schon behandelte Poren eindringen kann. Zweitanstriche bei Imprägnierungen sind daher nicht empfehlenswert. Ebenso sind Sanierungen an früher hydrophobierten Baukörpern sehr problematisch.

Die Hydrophobierung von Beton mit Stahlbewehrung ist in der Regel für den Korrosionsschutz des eingebauten Stahls nachteilig. Die Carbonatisierung verringert die Betonalkalität und damit die Inhibierung der Stahloberfläche. Da die Poreneingänge nicht durch flüssiges Wasser verstopft sind, können Kohlendioxid, Luftsauerstoff und Wasserdampf im geschädigten Beton ungehindert bis zum Eisen vordringen. Es genügt eine geringe anhaftende Feuchtigkeit auf der Bewehrung zur Einleitung und Fortsetzung der Stahlkorrosion.

Es bestand also die Notwendigkeit, neuen Betonbauten eine ausreichende Frost-Tausalz-Beständigkeit zu geben und alte Bauten durch Maßnahmen ebenfalls beständig gegen Frost und Tausalze zu machen und zusätzlich die Bewehrung gegen Korrosion zu schützen.

Diese Aufgaben werden erfindungsgemäß durch Verwendung einer wässrigen, durch niedere Alkohole und Carbonationen modifizierten Alkalisilikatlösung gelöst. 10 kg dieser Lösung haben etwa die folgende Zusammensetzung:

| | |
|---|---|
| Kieselsäure berechnet als SiO₂ | 30 - 32 Mol |
| Alkalimetallionen berechnet als Na⁺¹ | 23 - 24, 3 Mol |
| C₁ - C₃-Alkohol berechnet als Ethanol | 2 - 2,1 Mol |
| Carbonat berechnet als CO₃ ⁻² | 1,6 - 2,1 Mol |
| Wasser mindestens | 400 Mol |

Die Alkalimetallionen liegen vorzugsweise als Natrium- oder Kaliumionen vor. Die Viskosität der Lösung beträgt etwa 10 - 12 mPa.sec. Als Alkohol wird Ethanol bevorzugt.

Die Anwendung der Lösung ist einfach und wenig arbeitsaufwendig. Die zu schützende Betonoberfläche muß nur durch Fegen von Fremdkörpern, losem Schmutz und Betonabrieb befreit werden. Scharfes Bürsten sowie Sandstrahlen ist nicht erforderlich. Auch braucht die Betonfläche nicht trocken zu sein. Lediglich Wasserpfützen, stehendes oder fließendes Wasser sollten beseitigt bzw. abgeleitet werden.

Es sind drei Anstriche mit steigender Konzentration vorteilhaft, die mit üblichen Mitteln der Anstrichtechnik aufgebracht werden. Die Originallösung wird für den ersten Anstrich mit Wasser im Verhältnis 1 Vol.-Teil Lösung : 3 Vol.-Teilen Wasser verdünnt. D.h. in diesem Fall kommen auf die angegebenen Molmengen Kieselsäure, Alkaliionen, Alkohol und Carbonat etwa 1200 Mol Wasser.

Für den zweiten Anstrich wird weniger verdünnt: 1 Vol.-Teil Lösung : 2 Vol.-Teilen Wasser und die Verdünnung für den dritten Anstrich beträgt 1 : 1.
Die Wartezeiten zwischen den Anstrichen sind von der Witterung abhängig und betragen in der Regel nur einige Stunden. Eine Anwendung ohne Wasserverdünnung ist auch möglich, besonders wenn es sich um eine stark geschädigte Betonoberfläche handelt.

Die Aufwandmengen sind vom Zustand des Betons abhängig. Sie liegen über 100 g/m² Betonfläche und betragen vorzugsweise zwischen 100 und 300 g/m² Betonfläche und ausnahmsweise auch noch mehr.

Betonkonstruktionen, die erfindungsgemäß behandelt werden können, sind vorwiegend Betonbauwerke mit Eisen- oder Stahlbewehrung wie Fahrbahnen, Autobahnen, Brücken und deren Kappen, Parkhäuser, Start- und Landebahnen der Flughäfen sowie allgemein tausalzbelastete Betonbauteile.

Die Wirksamkeit der Anwendung der modifizierten Alkalisilikatlösung wurde an Betonprobekörpern geprüft. Nach drei Anstrichen mit steigender Konzentration, wie oben beschrieben, wurden sie zusammen mit unbehandelten Vergleichsmustern nach der ÖNORM 3306 getestet.

Um zwei verschiedene Zerstörungsgrade der Betonoberflächen zu simulieren, wurden die Betonprobekörper der Abmessungen 20x20x7 cm, der Festigkeitsklasse B 45 nach der Norm DIN 1045 und einer Sieblinie A/B 8 des Zuschlags mit einem Größtkorn von 8 mm im Bereich zwischen den beiden Grenzsieblinien A 8 und B 8 sandgestrahlt bzw. mittels Drahtbürste die Prüffläche vor der Behandlung mit der Lösung vorbereitet.

Die Behandlung erfolgte mit einer Lösung der Zusammensetzung:

| | |
|---|---|
| Kieselsäure berechnet als SiO₂ | 31 Mol |
| Na⁺¹-Ionen | 23,6 Mol |
| Ethanol | 2,1 Mol |
| Carbonat berechnet als CO₃ ⁻² | 1,9 Mol |
| Wasser | 420 Mol |

Die sandgestrahlte Oberfläche (Variante A) verbrauchte 223,8 g Originallösung/m² Betonfläche,
die gebürstete Fläche (Variante B) verbrauchte 163,8 g Originallösung/m² Betonfläche.

Nach Ablauf von 50 Zyklen fand bei den beschichteten Flächen keine Veränderung statt, d.h., es traten keine Frostschäden, keine Abwitterungen und entsprechend auch kein Gewichtsverlust auf. Die nach der ÖNORM 3306 geforderten Bedingungen (max. 50 g Gewichtsverlust) wurden von allen mit der Lösung imprägnierten Betonprüfkörper erfüllt. Die unbeschichteten Vergleichsproben wurden nach 40 Zyklen aus dem Test genommen, weil schon große Schäden sichtbar wurden. Die Abwitterungen wurden wie folgt gemessen:
Variante A, unbehandelt: 511,25 g Verlust/m² Betonfläche
Variante B, unbehandelt: 734,25 g Verlust/m² Betonfläche

## Patentansprüche

1. Verwendung der Lösung eines modifizierten Alkalisilikats der Zusammensetzung:
| | |
|---|---|
| Kieselsäure berechnet als SiO₂ | 30 - 32 Mol |
| Alkalimetallionen berechnet als Na⁺¹ | 23 - 24,3 Mol |
| C₁ - C₃-Alkohol berechnet als Ethanol | 2 - 2,1 Mol |
| Carbonat berechnet als CO₃ ⁻² | 1,6 - 2,1 Mol |
| Wasser mindestens | 400 Mol |
zur Verbesserung der Frost-Tausalz-Beständigkeit von Betonkonstruktionen.

2. Verfahren zur Verbesserung der Frost-Tausalz-Beständigkeit bei Betonkonstruktionen, dadurch gekennzeichnet, daß man die modifizierte Alkalisilikatlösung nach Anspruch 1 in Mengen über 100 g/m² Betonfläche aufträgt.

3. Verfahren nach Anspruch 2, dadurch gekennzeichnet, daß die Aufwandmenge 100 - 300 g/m² Betonfläche beträgt.

4. Verfahren nach Anspruch 2 oder 3, dadurch gekennzeichnet, daß die Oberflächenbehandlung bei neuen Bauwerken und Bauteilen frühestens 28 Tage nach der Fertigstellung des Betons vorgenommen wird.

5. Verfahren nach einem der Ansprüche 2 bis 4, dadurch gekennzeichnet, daß die Oberfläche des Betons lediglich durch Fegen von Fremdstoffen und losem Betonmaterial befreit wird.

6. Verfahren nach einem der Ansprüche 2 bis 5, dadurch gekennzeichnet, daß mehrere Anstriche mit steigender Konzentration aufgebracht werden.

## Claims

1. The use of the solution of a modified alkali silicate of the composition:
| | |
|---|---|
| silicic acid calculated as SiO₂ | 30 - 32 mol |
| alkali metal ions calculated as Na⁺¹ | 23 - 24.3 mol |
| C₁ - C₃ alcohol calculated as ethanol | 2 - 2.1 mol |
| carbonate calculated as CO₃ ⁻² | 1.6 - 2.1 mol |
| water at least | 400 mol |
for improving the frost-thaw salt resistance of concrete structures.

2. A method for the improvement of the frost-thaw salt resistance in concrete structures, characterised in that the modified alkali silicate solution according to Claim 1 is applied in quantities of more than 100 g/m² concrete surface.

3. A method according to Claim 2, characterised in that the amount of application is 100 - 300 g/m² concrete surface.

4. A method according to Claim 2 or 3, characterised in that the surface treatment for new structures and components is effected at the earliest 28 days after the finishing of the concrete.

5. A method according to one of Claims 2 to 4, characterised in that the surface of the concrete is freed of foreign matter and loose concrete material merely by sweeping.

6. A method according to one of Claims 2 to 5, characterised in that a plurality of coatings are applied with increasing concentration.

## Revendications

1. Utilisation de la solution d'un silicate alcalin modifié de composition suivante :
| | |
|---|---|
| acide silicique exprimé en SiO₂ | 30 - 32 moles |
| ions de métaux alcalins exprimé en Na⁺¹ | 23 - 24,3 moles |
| alcool en C₁-C₃ exprimé en Ethanol | 2 - 2,1 moles |
| carbonate exprimé en CO₃ ⁻² | 1,6 - 2,1 moles |
| eau au minimum | 400 moles |
pour l'amélioration de la résistance au sel de déverglaçage de constructions en béton.

2. Procédé pour améliorer la résistance au déverglaçage de constructions en béton, caractérisé en ce qu'on applique la solution modifiée de silicate alcalin suivant la revendication 1 en quantités de plus de 100 g/m² de surface de béton.

3. Procédé suivant la revendication 2, caracérisé en ce que la quantité appliquée s'élève à 100 - 300 g/m² de surface de béton.

4. Procédé suivant la revendication 2 ou 3, caractérisé en ce que le traitement de surface est effectué dans le cas d'ouvrages nouveaux et d'éléments nouveaux de construction au plus tôt 28 jours après la fabrication du béton.

5. Procédé suivant l'une des revendications 2 à 4, caractérisé en ce que la surface du béton est débarrassée des corps étrangers et des débris de béton par simple balayage.

6. Procédé suivant l'une des revendications 2 à 5, caractérisé en ce que plusieurs couches de concentration croissante sont appliquées.
